# EUROPEAN PATENT APPLICATION

(11) **EP 3 348 890 A1**
(43) Date of publication of application: **18.07.2018**
(21) Application number: 15903540.1
(22) Date of filing: 08.09.2015
(51) Int. Cl.: F16L 21/08, F16L 23/024

(54) **PRESSURE PIPE CONNECTION METHOD AND METHOD FOR CONSTRUCTING PRESSURE PIPE WITH FLANGE**

(71) Applicant: Nihonkansen Kogyo Kabushiki Kaisha, Hiroshima 721-0956 (JP)
(72) Inventor: KOBAYASHI Masato, Fukuyama-shi Hiroshima 721-0956 (JP)
(74) Representative: Kramer Barske Schmidtchen Patentanwälte PartG mbB
(86) International application number: PCT/JP2015/075383
(87) International publication number: WO 2017/042874

(57) **Abstract**

Provided is a pressure pipe connection structure that reduces man-hours for machining the pressure pipes and does not require high machining precision. Multiple arc members 5a, 5b form a ring shape that makes a circle by matching the end faces thereof 50a, 50b to each other. Non-penetrating holes 53 are provided on the outer circumference of the arc members 5a, 5b. The ring formed by the multiple arc members 5a, 5b has an inner diameter that is smaller than the outer diameter and larger than the inner diameter of a pressure pipe 2. A cylinder sleeve 1 has an inner cylinder surface 11a inside which the entire outer circumferences of arc members 5a, 5b are fitted into a hollow internal space 10, into which respective pressure pipes 2 are inserted from opposing entrances; and multiple through holes 12, which penetrate from the outside and are provided with female thread ridges. The pressure pipes 2 are cut to a certain length that is suited to the placement site and grooves 23 are cut. The arc members 5a, 5b are fitted into the groove 23, and the arc members 5a, 5b are positioned on an inner cylinder surface 11a by inserting the pressure pipes 2 into a sleeve 1, the respective through holes and non-penetrating holes are made to communicate with each other, and the pressure pipes are fixed using bolts 4.

## Description

### TECHNICAL FIELD

The present invention relates to a pressure pipe connection method and a method for constructing pressure pipes with a flange that enable connecting pressure pipes cut to a certain length that is suited to a placement site without requiring welding.

### BACKGROUND ART

A carbon steel pipe (STPG) is used as a steel pipe for pressure piping. The carbon steel pipe has a minimum yield load and a breaking strength determined by the Japanese Industrial Standards (JIS). On the other hand, a coupling joint for connecting pressure pipes requires the yield load and the breaking strength exceeding those of the pressure pipes. Specifically, a tension test sets a joint strength to such strength that the connected pressure pipe base material should be cut. In addition, in the welding connection, the pressure pipe is required to extend a leg length on the entire circumference in order to keep such weld strength that the pressure pipe base material should be cut in the same way. Such a welding work requires skill, and therefore, the person who can perform the work is limited.

The connecting means without welding is means for adhesive or bolts. For example, both of patent literatures 1 and 2 disclose means for connecting pipe and pipe by bolts. These technologies are to fix the pipes, wherein electric wires are housed, by deforming the pipe side by fastening force of the bolts screwed on peripheral walls of the pipes along their radial direction. These pipes are to protect the inner electric wires, and the electric wires in themselves do not either have pressure or leak. Patent literature 3 discloses a technology for connecting poles by the bolts, wherein the poles are fixed by deforming the side surface by fastening force of the bolts.

On the other hand, the applicant has proposed a pressure pipe connection technology for guiding high-pressure fluid without using welding, wherein bolts are used as connecting means as shown in patent literature 4. There are provided a plurality of bottomed holes on the pressure pipes, and the pressure pipes are fixed by the bolts from a surface of a sleeve for externally fitting the pressure pipes towards the bottomed holes. The bottomed holes provided on the pressure pipe reduces the breaking strength of the pressure pipe in itself. The patent literature 4 discloses that the bottomed holes are arranged on the pressure pipe at intervals of equal angular on the entire circumference so as not to be overlapped to each other in the direction of the center line to disperse stresses in order to make the strength of the connecting portion exceed the yield load required for the pressure pipe (when the pressure pipe is STPG370, the value specified by standards is 370 N/mm²).

### RELATED ART DOCUMENTS

### PATENT DOCUMENTS

Patent literature 1: Japanese Examined Utility Model Application Publication No. 51-9667
Patent literature 2: Japanese Unexamined Patent Application Publication No. 2003-180011
Patent literature 3: Japanese Unexamined Patent Application Publication No. 2010-180957
Patent literature 4: WO 2012/096042A1

### SUMMARY OF THE INVENTION

### OBJECT TO BE SOLVED BY THE INVENTION

According to the connection structure shown in the patent literature 4, in piping work of the pressure pipes requiring a tensile strength, the pressure pipes can be connected by the bolts without using welding. However, boring is an operation to open many bottomed holes on the pressure pipes cut to a required length corresponding to the number of the bolts, and therefore, many machining man-hours are required. Besides, because the bottomed holes are dispersedly opened in a longitudinal direction of the pressure pipes, a tool excellent in machining accuracy has been required.

It is an object of the present invention to provide a pressure pipe connection method and a method for constructing pressure pipes with a flange, which reduce man-hours for machining the pressure pipes and never require the excellent machining accuracy.

### MEANS TO SOLVE THE PROBLEM

The typical constitution of the present invention to accomplish the above-identified problems is as follows. The present invention is characterized in a pressure pipe connection method for flowing pressurized fluid, by preparing a plurality of arc members formed in a ring shape that makes a circle by matching end faces, wherein the arc members respectively have non-penetrating holes on the outer circumferences and an inner diameter smaller than an outer diameter of the pressure pipes and larger than an inner diameter of the pressure pipes, preparing a cylindrical sleeve in an inside hollow where the pressure pipes are inserted from opposing entrances to each other, wherein the cylindrical sleeve has a plurality of through holes with female threads penetrating through from the outside at positions corresponding to the non-penetrating holes and an inner cylinder surface for externally fitting the outer circumferences of the arc members formed in the ring shape on the entire circumference, preparing a plurality of bolts for being screwed into the thorough holes of the sleeve, cutting the pressure pipes to a certain length that is suited to a placement site, cutting grooves into which the arc members are fitted on positions distant from the cut ends of the pressure pipes, fitting the arc members into each groove to form a ring, inserting the pressure pipes into the hollow inside the sleeve and positioning the arc members fitted into the grooves on the inner cylinder surface to communicate the through holes and the non-penetrating holes to each other, and fixing the pressure pipes through the through holes of the sleeve using the bolts.

Further, the typical constitution of the present invention to accomplish the above-identified problems is as follows. The present invention is characterized in a method for constructing pressure pipe with a flange for flowing pressurized fluid in its inside, by preparing a plurality of arc members for forming a ring shape that makes a circle by matching end faces, wherein the arc members respectively have non-penetrating holes on the outer circumferences and an inner diameter smaller than an outer diameter of the pressure pipes and larger than an inner diameter of the pressure pipes, preparing a cylindrical flange in an inside hollow where the pressure pipes are inserted from opposing entrances to each other, wherein the cylindrical flange has an inner cylinder surface for externally fitting the outer circumferences of the arc members formed in the ring shape on the entire circumference and a plurality of through holes with female threads penetrating through from an outside at positions corresponding to the non-penetrating holes and horizontal holes bored along the circumference at intervals equal angular in a direction of a center line of the hollow, preparing a plurality of bolts for being screwed into the thorough holes of the flange, cutting the pressure pipes to a certain length that is suited to a placement site, cutting grooves into which the arc members are fitted on positions distant from the cut ends of the pressure pipes, fitting the arc members into each groove to form a ring, inserting the pressure pipes into the hollow inside the flange and positioning the arc members fitted into the grooves on the inner cylinder surface to communicate the through holes and the non-penetrating holes to each other, and fixing the pressure pipes through the through holes of the flange using the bolts.

### EFFECTS OF THE INVENTION

According to the present invention, there is an effect that piping work is performed with reducing machining man-hours for the pressure pipes and without requiring high machining skill because a work for cutting a groove, into which the arc members are fitted, for the pressure pipes cut to an even required length can be performed comparatively easily and accurately by utilizing a lathe and, once the cutting work is done, the remaining piping work can be completed by combing parts such as a sleeve, flange and bolts prepared previously.

### BRIEF DESCRIPTION OF THE DRAWINGS

FIG. 1 is a view showing an example of experiment.
FIG. 2 is a view showing a connection structure of an embodiment by a sleeve joint.
FIG. 3 is a view showing a sleeve and an insert.
FIG. 4 is a view showing a ring.
FIG. 5 is a view showing another embodiment.
FIG. 6 is a view showing a connection structure of further another embodiment.
FIG. 7 is a view showing a connection structure of another embodiment of a flange joint.
FIG. 8 is a view showing a connection structure of further another embodiment of the flange joint.
FIG. 9 is a view showing a connection structure of an embodiment of a sleeve joint.
FIG. 10 is a view showing an example of connection of the flange joint.

### MODE FOR CARRYING OUT THE INVENTION

A pressure pipe connection structure for connecting the pressure pipes using connection strength by bolts will be concretely explained with reference to figures as follows.

Some connection structures that will be explained below as embodiments of the present invention include a connection structure by a sleeve joint and a connection structure by a flange joint. First of all, the principle common to these embodiments will be explained. In the patent literature 4, in order to make the strength of the connection part exceed yield load required for the pressure pipe, bottomed holes are opened on the pressure pipe at intervals of equal angle on the entire circumference so as not to be overlapped to one another in a direction of a center line to disperse stress.

In the present invention, machining for forming a groove, which makes a circle with the same width, on the pressure pipe is applied on a position away from the end of the pressure pipe. According to the patent literature 4, it is considered that the thick-wall part of the pressure pipe is cut away on the entire circumference to decrease the strength of the connection part and not to reach the yield load required for the pressure pipe.

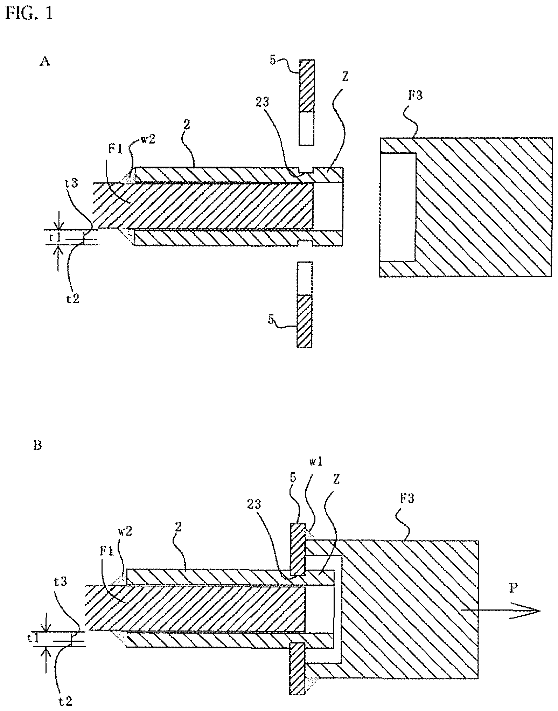

In an experiment, it was confirmed whether or not a structure of the connection part was deformed when the thick-wall part of the pressure pipe was cut away on the entire circumference. In a device of FIG. 1, two samples (sample 1-1, sample 1-2) of STPG370 sch40 20A pipe having a thickness t1 of 3.9 mm were used as a pressure pipe 2. In the sample 1-1, a groove 23 has a depth t2 of 1.5 mm on the entire circumference and the pressure pipe 2 has a residual wall thickness t3 of 2.4 mm. In the sample 1-2, the groove 23 has the depth t2 of 1.0 mm on the entire circumference and the pressure pipe 2 has the residual wall thickness t3 of 2.9 mm. The STPG370 sch40 20A pipe has a proof stress (a yield point) equal to or greater than 48 KN and a breaking stress equal to or greater than 82 KN on standards. A ring 5 is fitted into the groove 23, a welding w1 is applied to a jig F3, and a tensile force P is applied on an iron rod F1. Besides, an outer diameter of the iron rod F1 is smaller than an inner diameter of the pressure pipe 2, so that the iron rod F1 can be inserted into the pressure pipe 2, and a portion between the pressure pipe 2 end and the iron rod F1 is welded w2 with a leg length corresponding to the thickness of the pressure pipe 2.

When the tensile stress P of 89.5 KN was applied on the sample 1-1 or when the tensile stress P of 64.6 KN was applied on the sample 1-2, a portion Z was cut off from the groove 23. A cut surface was ruptured almost vertically at a position where it enters slightly from a corner part of the bottom of the groove 23 toward a center of the groove 23. At this time, it is considered that the connection structure using the groove 23 and the ring 5 is destroyed.

Both samples were respectively confirmed that the connection part had the strength equal to or greater than the proof stress required for the pressure pipe 2. It is assumed that the stress is dispersed on the entire circumference because the groove 23 makes a circle with the same width on the entire circumference of the pressure pipe. Besides, because the thickness of the groove 23 portion is thinned, when a tensile force near the yield point (equal to or greater than 48 KN) is applied on the pressure pipe 2, the pressure pipe may be deformed by the force equal to or lower than the yield point. However, because the length of the portion Z does not change, compression pressure applied on a seal member such as an O-ring that will be described later remains unchanged, and therefore, it doesn't follow that the groove 23 portion was destroyed as for the connection structure.

### EXAMPLE 1

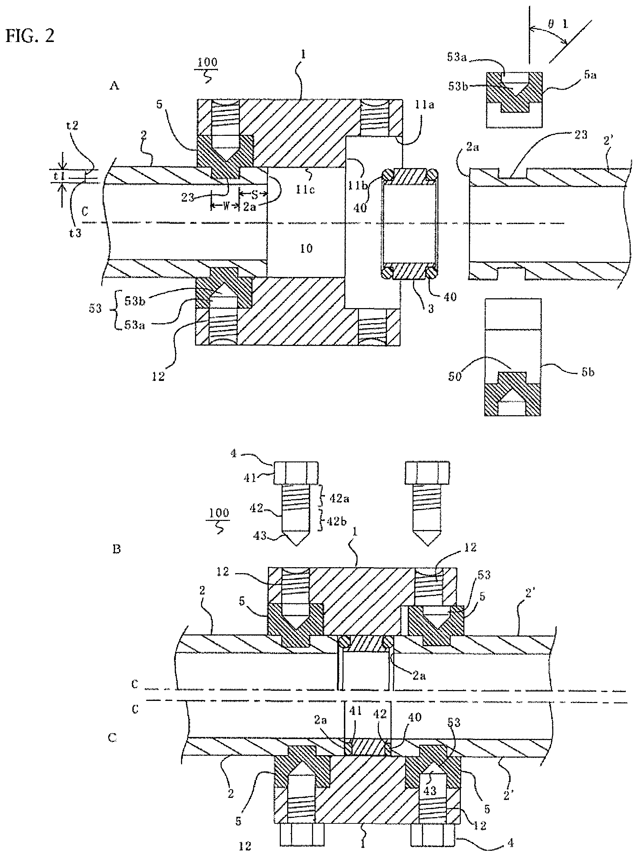

FIG. 2 shows a connection structure 100 relating to the first embodiment, which shows an example of a sleeve joint for connecting pressure pipes. The connection structure 100 includes a sleeve 1, pressure pipes 2 and 2', an insert 3, a plurality of bolts 4 and a ring 5. The sleeve 1, the insert 3, the bolts 4 and the ring 5 are mass produced at a factory in advance. On the other hand, although the pressure pipes 2 and 2' themselves are standardized mass-produced articles, their lengths are cut and adjusted corresponding to an equipment installed thereto.

The sleeve 1 is a straight cylinder having a hollow 10 into which the pressure pipes 2 and 2' are respectively inserted from opposing entrances to each other. Each of the entrances is provided with a step 11b retreating radially outside on the entire circumference of the sleeve. The step 11b radially retreats from the hollow 10 and reaches inner cylinder surface 11a externally fitting the outer circumference of the pressure pipe 2. The inner cylinder surface 11a is always positioned on the closest portion for an exit of the total length of the sleeve 1. If the inner cylinder surface 11a is not positioned on the closest portion for the exit, a narrow-diameter portion should not be present between the inner cylinder surface 11a and the exit.

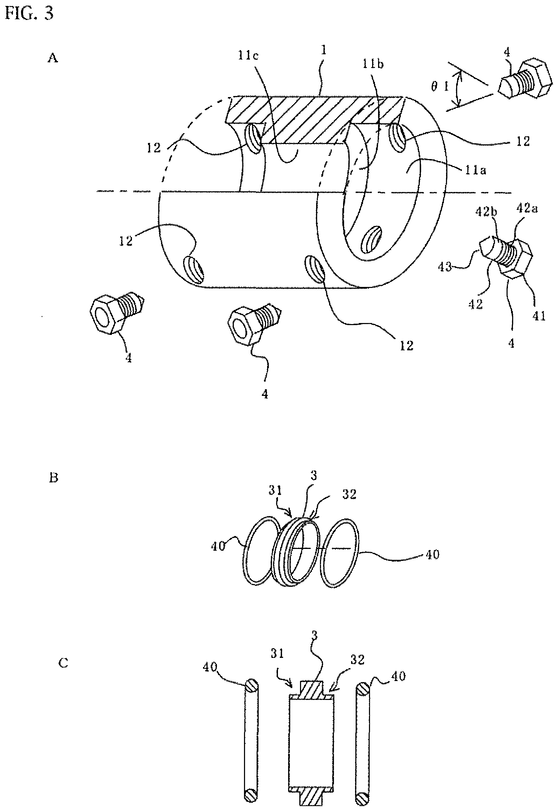

In FIG. 3, FIG. 3A is a perspective view of the sleeve 1. A plurality of through holes 12 each having a female-thread is provided at intervals of equal angular (for example, at intervals of 90 degrees) from the outer circumferential surface of the sleeve 1 toward the inner cylinder surface 11a. Each bolt 4 has a head part 41, a body part 42 and a tail part 43, and the body part 42 is screwed into a bolt hole 13. The body part 42 has a male thread on an area 42a screwed in the through hole 12, and other area 42b is formed in a cylindrical surface. The tail part 43 has a conical male taper surface with a taper angle θ1.

Referring back to FIG. 2, the pressure pipe 2 is cut to a certain length that is suited to a placement site, and thereafter, a groove 23 is machined so as to separate from an end part by a distance S. Although the depth of the groove 23 depends on a thickness and a caliber of the pressure pipe 2, the width W of the groove 23 must be at least equal or larger than the residual wall thickness t3. The groove 23 can be cut using a lathe. For example, the groove 23 is formed by pressing a cutting tool to the pressure pipe 2 and cutting as rotating the pressure pipe 2 or the cutting tool around a center line C.

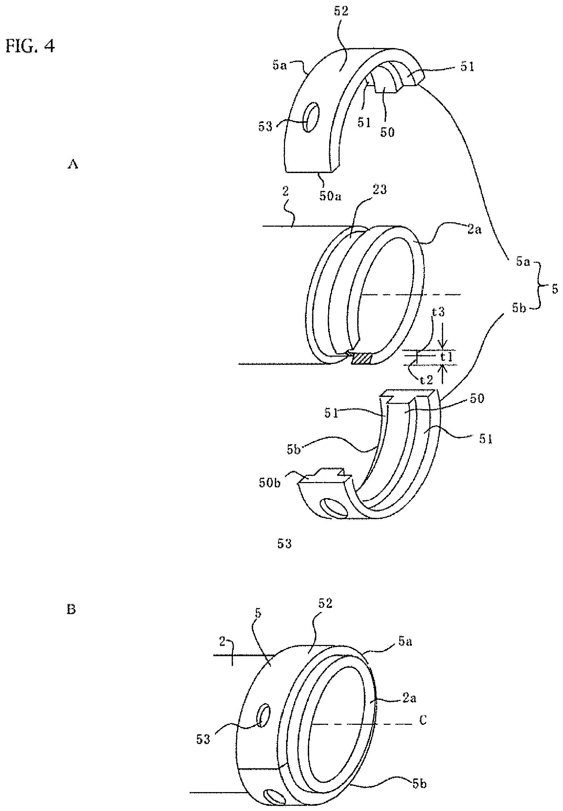

In FIG. 4, FIG. 4A is a perspective view of the end part of the pressure pipe 2 having the groove 23. The distance S is at least equal or larger than the residual wall thickness t3. The groove 23 makes a circle with the same width on the entire circumference of the pressure pipe 2.

The ring 5 includes arc members 5a and 5b each having 180 degrees, and each of the arc members 5a and 5b has a projecting part 50 to be fitted in the groove 23. The inner diameter of the projecting part 50 is smaller than the outer diameter of the pressure pipe 2 and larger than the inner diameter thereof. The inner diameter of the projecting part 50 is made equal to the diameter of the groove 23. The projecting part 50 is fitted in the groove 23 formed on the pressure pipe 2, and the end surfaces 50a and 50b of the arc members 5a and 5b are respectively matched to each other to form a ring for surrounding the pressure pipe 2 (FIG. 4B). In this time, a portion 51 other than the projecting portion 50 of the inner circumferential surfaces of the arc members 5a and 5b is in contact with the outer circumferential surface of the pressure pipe 2. Non-penetrating holes 53 are bored on the outer circumferential surface 52 of the ring 5 at intervals of equal angular. The non-penetrating holes 53 are respectively provided corresponding to the positions of the through holes 12 of the sleeve 1.

Referring back to FIG. 2, the non-penetrating hole 53 includes a portion 53a formed from an inner cylinder surface having no threads and a portion 53b formed from a conical female taper surface continuing to the back of the portion 53a. The area 42b of the bolt 4 is inserted into the portion 53a, and the tail part 43 is inserted into the portion 53b. The taper angular θ1 of the portion 53b is equal to the taper angular θ1 of the tail part 43 of the bolt 4.

When fitting the ring 5 on the pressure pipe 2 and inserting the end surface 2a of the pressure pipe 2 into the hollow 10 of the sleeve 1, the inner cylinder surface 11a of the sleeve 1 is externally fitted on and made in contact with the outer circumferential surface 52 of the ring 5 on the entire circumference. Besides, the step 11b abuts against the ring 5. This state is shown in left side of FIG. 2A. The insert 3 is inserted into the hollow 10 of the sleeve 1. The insert 3 is to seal the end surface 2a of the pressure pipe 2.

FIG. 3B is a perspective view of the insert 3, and FIG. 3C illustrates a cross section of the insert 3. The insert 3 has step-like grooves 31 and 32 that make a circle respectively on both sides. The outer diameter of the insert 3 is equal to the inner diameter of the hollow 10 of the sleeve 1. The O-rings are installed into the step-like grooves 31 and 32. In a state where the pressure pipe 2 is inserted into the sleeve 1, when the insert 3 installed the O-rings 40 in the step-like grooves 31 and 32 is inserted into the hollow 10 of the sleeve 1 from an opposite side, the end surface 2a of the pressure pipe 2 is brought in contact with the O-ring 40.

Further, as shown in FIG. 2B, the pressure pipe 2' fitted with the ring 5 is inserted from the opposite side of the pressure pipe 2. The end surface 2a of the pressure pipe 2' abuts against the O-ring 40 and is shifted in a direction along the center line C, and the through holes 12 of the sleeve 1 and the corresponding non-penetrating holes 53 of the ring 5 are shifted to each other.

In this state, the bolts 4 are screwed into the through holes 12. In the process that the male taper surface of the tail part 43 of the bolt 4 slides and enters on the female taper surface of the non-penetrating hole 53, the pressure pipe 2' enters the hollow 10 of the sleeve 1 to compress the O-rings 40 between the end surfaces 2a and the grooves 31 and 32. When the bolt 4 finishes being screwed, the O-rings 40 are in a state that a proper compaction force is applied on.

Although the ring 5 includes the arc members 5a and 5b each having 180 degrees in this example, the ring 5 can be divided into a plurality of arc members each having 180 degrees or smaller if the total angle becomes 360 degrees.

### EXAMPLE 2

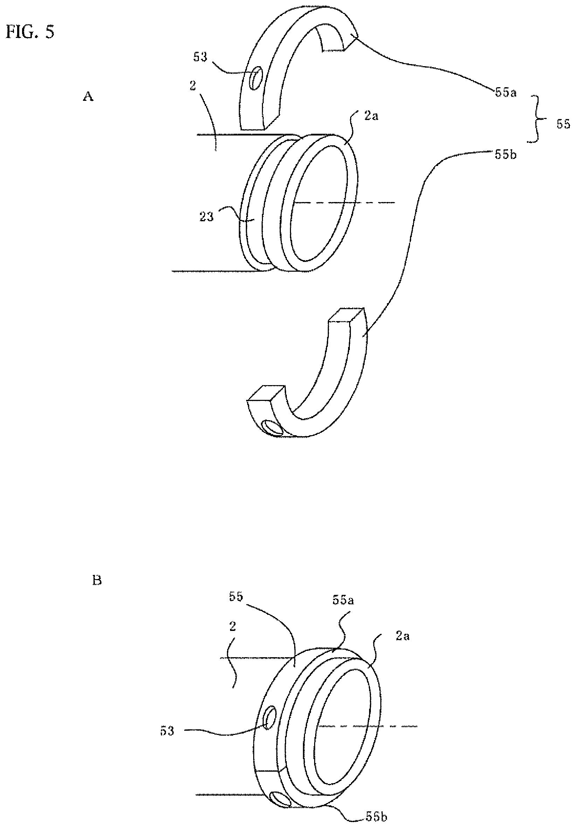

Example 2 is shown in FIG. 5. In Example 1, the cross section of the ring 5 has the projecting part 50 shaped in T-letter, whereas in this example, a ring 55 has a rectangular cross section. The ring 55 includes arc members 55a and 55b that forms a circle. The ring 55 has the same non-though holes 53 as the ring 5 has. In comparison with the ring 5, the ring 55 is inferior in terms of strength because the ring 55 has no portion 51 being in contact with the outer circumferential surface of the pressure pipe 2. However, there is an advantage that the production cost is reduced because the portion 51 need not be molded.

### EXAMPLE 3

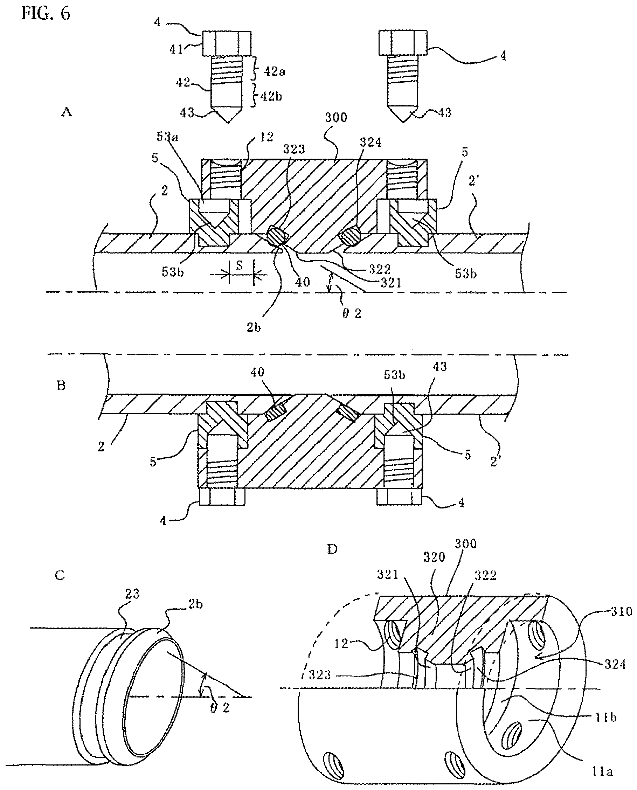

Although the insert 3 for housing the O-ring 40 is independent of the sleeve 1 in Example 1, the insert 3 in Example 3 is integrated with a sleeve 300. In this case, in order to house the O-ring 40 having a large diameter as much as possible, the end part of the pressure pipe 2 is machined into the male taper surface 2b inclined at the taper angle θ2 (FIG. 6C), and female taper surfaces 321 and 322 for receiving the male taper surface 2b are provided to the sleeve 300 (FIG. 6D). A hollow 310 of the sleeve 300 includes a projecting portion 320 projecting to a position of the radius equal to the inner diameter of the pressure pipe 2. The projecting portion 320 has the female taper surfaces 321 and 322 toward the exits of the hollow 310 of the sleeve 300, and O-ring grooves 323 and 324 for housing the O-rings 40 are provided in the middle of the female taper surfaces 321 and 322. The female taper surfaces 321 and 322 are in surface contact with the male taper surface 2b of the pressure pipe 2, so that the taper angle is set to θ2. The groove 23 is machined on the rear side of the male taper surface 2b so as to be separated by at least distance corresponding to the thickness of the groove portion of the pressure pipe 2.

The bolt 4 and the ring 5 are the same as for Example 1, and the sleeve 300 has screwed through holes 12 at positions corresponding to the non-penetrating holes 53 of the ring 5 as well as the sleeve 1.

The O-rings 40 are installed in the O-ring grooves 323 and 324, and thereafter, the pressure pipes 2 and 2' with the rings 5 are respectively inserted from both ends of the sleeve 300 (FIG. 6A). The male taper surfaces 2b of the pressure pipes 2 and 2' abut on the O-rings 40, and the through holes 12 of the sleeve 300 are not communicated with the corresponding non-penetrating holes 53 of the ring 5 in the direction of the center line C.

In this state, when the bolts 4 are screwed into the through holes 12, the O-rings 40 are compressed between the male taper surfaces 2b of the pressure pipes 2 and 2' and the bottom surfaces of the O-ring grooves 323 and 324 in the process when the tail parts 43 of the bolts 4 enter into the portions formed of the conical peripheral surfaces of the non-penetrating holes 53. After the bolts 4 finish being screwed, proper compression forces are applied on the O-rings 40 (FIG. 6B).

### EXAMPLE 4

Although the above-mentioned examples show connection structures for connecting the pressure pipes 2 and 2', the present example shows a connection structure by flange joint.

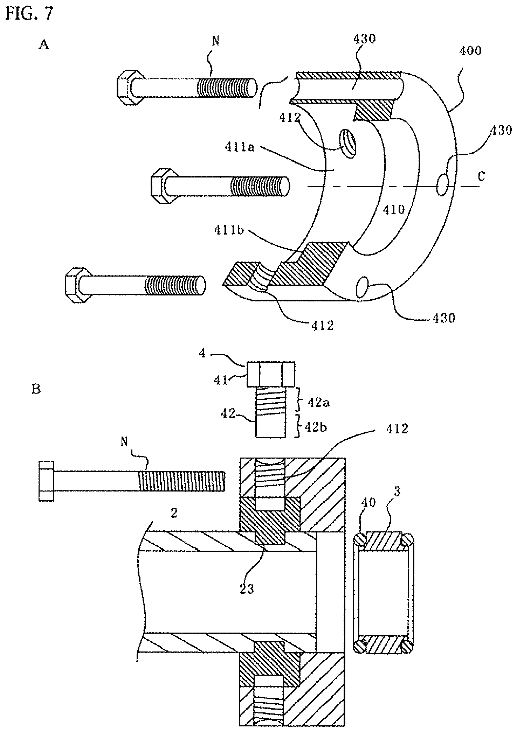

In FIG. 7, a groove 23 is formed on a pressure pipe 2 similarly in Example 1. Besides, an insert 3 and a ring 5 are also in the same way.

A flange 400 is a linear cylindrical pipe having a hollow 410, into which the pressure pipe 2 is externally fitted, and to an entrance of the hollow 410, a step 411b is provided so as to retreat radially outside on the entire circumference. The step 411b radially retreats from the hollow 410 and reaches an inner cylinder surface 411a facing forwardly toward the outer circumference of the pressure pipe 2.

A plurality of through holes 412 having threads is bored from the outer circumferential surface of the flange 400 toward the inner cylinder surface 411a at intervals of equal angular. Further, the flange 400 has a plurality of horizontal holes 430 in the direction of the center line C of the hollow 410 at intervals of equal angular. The pressure pipe is connected to other machinery with tightening bolts N by using the horizontal holes 430.

Bolts 44 are screwed into the through holes 412. A body part 442 of a bolt 44 has an area 442a cut male threads to be screwed in the through hole 412, and other area 442b formed in a cylindrical surface. On the other hand, the bolt 44 has no conical tail parts 43 unlike the bolt 4.

The compression to the O-rings 40 of the insert 3 is achieved by using the bolts inserted into the horizontal holes 430.

### EXAMPLE 5

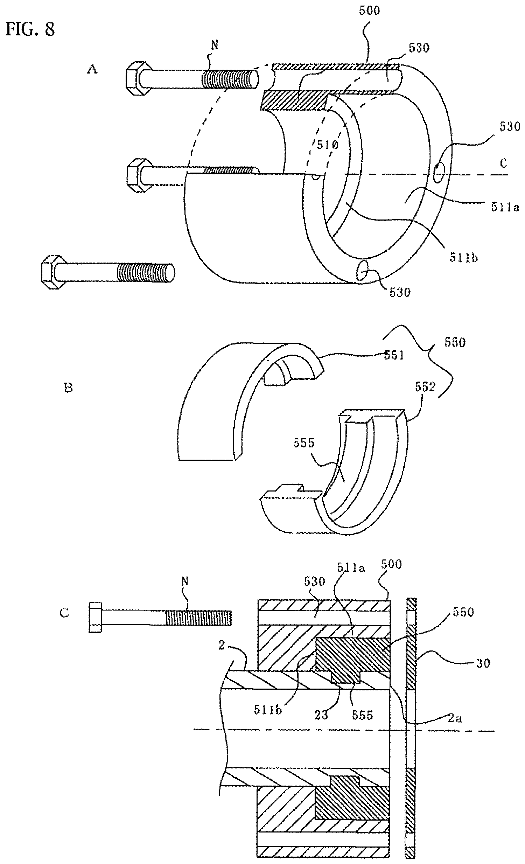

Example 5 illustrated in FIG. 8 shows a connection structure for fitting a flange to the pressure pipe 2 as with Example 4.

A flange 500 is a linear cylindrical pipe having a hollow 510 externally fitted to the pressure pipe 2, and to an entrance of the hollow 510, a step 511b is provided so as to radially retreat outside on the entire circumference. The step 511b radially retreats from the hollow 510 and reaches an inner cylinder surface 511a externally fitting onto the outer circumference of the pressure pipe 2. The flange 500 has no through holes 412 in the flange 400. The flange 500 has a plurality of horizontal holes 530 in the direction of the center line C at intervals of equal angular. The pressure pipe is connected to other machinery with tightening bolts N by using the horizontal holes 530.

On the other hand, a ring 550 is equal to the ring 5 except for having no non-penetrating holes 53, namely, the ring 550 is divided to a plurality of arc members 551 and 552 and has a projection portion 555 fitted into the groove 23 of the pressure pipe 2.

The flange 500 is externally fitted to the pressure pipe 2 cut in the certain length as well as having the groove 23 cut to the end so that the inner cylinder surface 511a is positioned near the end surface 2a. After fitting the arc members 551 and 552 in the groove 23 of the pressure pipe 2, the flange 500 externally fitted to the pressure pipe 2 is displaced at a position of the ring 550 to oppose the ring 550 to the inner cylinder surface 511a. The pressure pipe is connected to other machinery and so on via a gasket 30 by using the plurality of horizontal holes 530.

### EXAMPLE 6

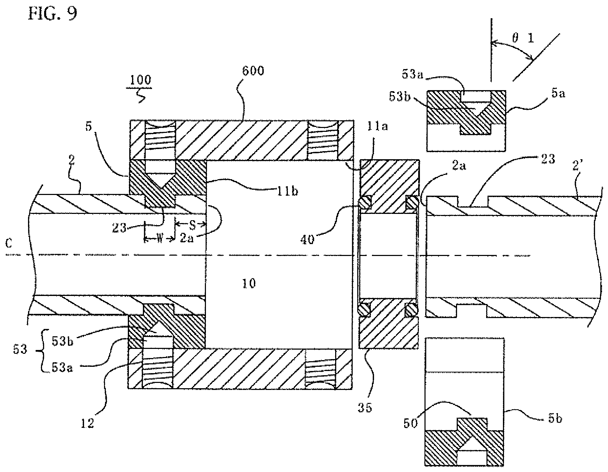

Although Example 6 illustrated in FIG. 9 refers to an example of a sleeve joint for connecting pressure pipes as with Example 1, it is different from Example 1 in that a sleeve 600 is shaped in a cylindrical form equal to the outer circumference of the ring 5 on the entire length and an insert 35 has an outer diameter equal to the outer circumference of the ring 5 unlike the insert 3. The other configuration in Example 6 is the same as Example 1.

### EXAMPLE 7

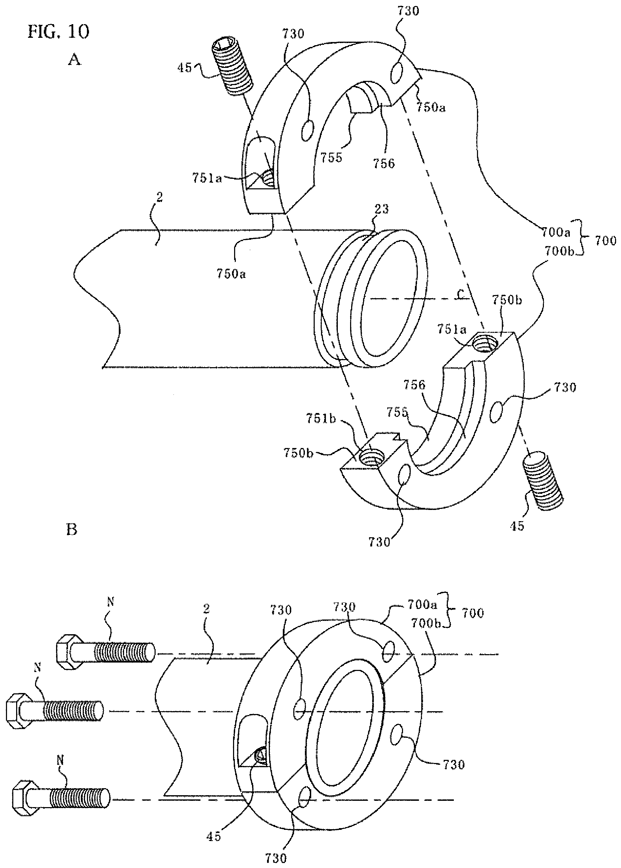

Example 7 illustrated in FIG. 10 also shows a connection structure for fitting a flange to the pressure pipe 2 as with Examples 4 and 5.

A flange 700 includes semicircular arc members 700a and 700b, which have protrusion parts 755 fitted into the groove 23 respectively. The arc members 700a and 700b have the same shape. An inner diameter of a protrusion part 755 is smaller than the outer diameter of the pressure pipe 2 and larger than the inner diameter thereof. The inner diameter of the protrusion part 755 is equal to the diameter of the groove 23. The arc members 700a and 700b are formed in a ring to surround the pressure pipe 2 by fitting the protrusion parts 755 into the groove 23 formed on the pressure pipe 2 and matching end surfaces 750a and 750b of the arc members 700a and 700b, respectively (FIG. 10B). In this time, portions other than the protrusion parts 755 on the inner circumferential surfaces of the arc members 700a and 700b are in contact with the outer circumferential surface of the pressure pipe 2. Besides, the end surfaces 750a and 750b are respectively provided with screw holes 750b having threads and the screw holes 751a passing through the outer circumferences thereof, so that the arc members 700a and 700b can be connected and fixed with headless screws 45. Further, the flange 700 has a plurality of horizontal holes 730 in a direction of a center line C of a circle composed of the arc members 700a and 700b at intervals of equal angular. The pressure pipe is connected to other machinery with tightening bolts N by using the horizontal holes 730.

In this way of manner, the flange 700 has the function of the ring 5 in Example 4 and the ring 550 in Example 5.

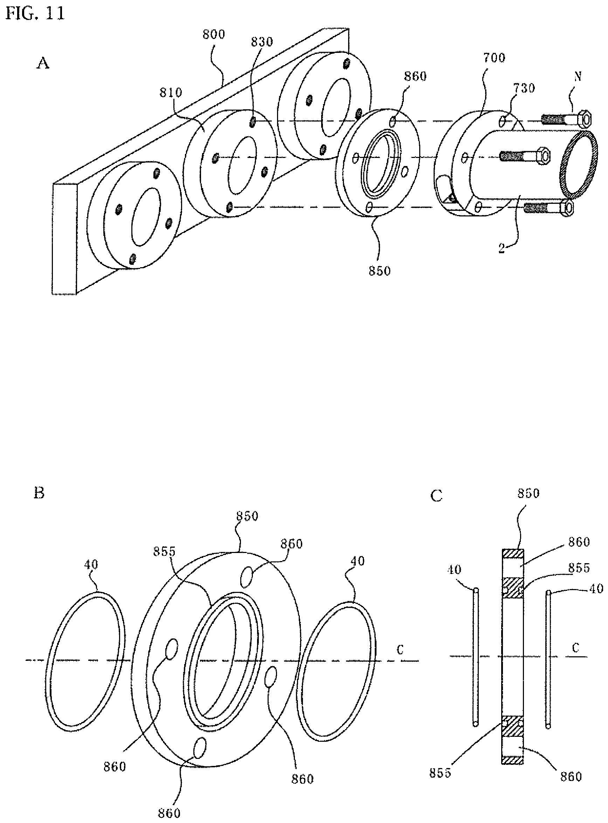

In FIG. 11, that the flange 700 of Example 7 is connected to a connector 810 of other machinery 800 is shown. An insert 850, unlike the insert 3, has a diameter equal to the outer circumference of the ring 5 and center line C directional through holes 860 at positions corresponding to the horizontal holes 730. The flange 700 is connected by screwing tightening bolts N into bolt holes 830 of the other machinery through the horizontal holes 730. The gasket 30 shown in FIG. 8 may be put between instead of the insert 850.

### DESCRIPTION OF THE PREFERENCE NUMERAL

- 1, 300, 600: sleeve
- 2, 2': pressure pipe
- 2a: end surface
- 2b: male taper surface
- 3, 35, 850: insert
- 4: bolt
- 5, 55, 550: ring
- 10: hollow
- 11a: inner cylinder surface
- 11b: step
- 12, 412: through hole
- 23: groove
- 40: O-ring
- 50a, 50b: end surface
- 53: non-penetrating hole
- 400, 500, 700: flange

## Claims

1. A pressure pipe connection method for connecting pressure pipes for flowing pressurized fluid in insides, said method comprising:
preparing a plurality of arc members formed in a ring shape that makes a circle by matching end faces, said arc members having non-penetrating holes on outer circumference and an inner diameter smaller than an outer diameter of the pressure pipes and larger than an inner diameter of the pressure pipes;
preparing a cylindrical sleeve having a plurality of through holes with female threads penetrating through from an outside at positions corresponding to the non-penetrating holes, said sleeve having an inner cylinder surface for externally fitting the outer circumferences of the arc members formed in the ring shape on the entire circumference in an inside hollow where the pressure pipes are inserted from opposing entrances to each other;
preparing a plurality of bolts for being screwed into the thorough holes of the sleeve;
cutting the pressure pipes to a certain length that is suited to a placement site;
cutting grooves fitted to the arc members on positions distant from the cut ends of the pressure pipes;
fitting the arc members into the grooves to form a ring;
inserting the pressure pipes into the hollow inside the sleeve and positioning the arc members fitted in the grooves against the inner cylinder surface to communicate the through holes and the non-penetrating holes each other; and
fixing the pressure pipes through the through holes of the sleeve using the bolts.

2. The pressure pipe connection method claimed in claim 1, wherein each of the non-penetrating holes of the arc members has a conical female taper surface, and each bolt has a tail part being provided with a male taper surface corresponding to the female taper surface, and an O-ring located between the pressure pipes is compressed in a process of the bolt male taper surface slipping on the female taper surface of the ring.

3. The pressure pipe connection method claimed in claim 2, wherein an insert having an O-ring groove for accommodating the O-ring is inserted between the pressure pipes in the hollow of the sleeve.

4. A method for constructing pressure pipes with a flange for flowing pressurized fluid in an inside, said method comprising:
preparing a plurality of arc members formed in a ring shape that makes a circle by matching end faces, having non-penetrating holes on outer circumference and an inner diameter smaller than an outer diameter of a pressure pipe and larger than an inner diameter of the pressure pipes;
preparing a cylindrical flange, said flange having an inner cylinder surface for externally fitting the outer circumferences of the arc members formed in the ring shape on an inside hollow where the pressure pipes are inserted from opposing entrances to each other on the entire circumference, a plurality of through holes with female threads penetrating through from an outside at positions corresponding to the non-penetrating holes, and horizontal holes bored on a circumference at intervals equal angular in a direction of a center line of the hollow;
preparing a plurality of bolts for being screwed into the thorough holes of the flange;
cutting the pressure pipes to a certain length that is suited to a placement site;
cutting a groove fitted to the arc members on positions distant from the cut end of the pressure pipes;
fitting the arc members into the groove to form a ring;
inserting the pressure pipes into the hollow inside the flange and positioning the arc members fitted into the groove against the inner cylinder surface to communicate the through holes and the non-penetrating holes each other; and
fixing the pressure pipes through the through holes of the flange using the bolts.

5. A method for constructing pressure pipes with a flange for flowing pressurized fluid in an inside, said method comprising:
preparing a plurality of arc members formed in a ring shape that makes a circle by matching end faces, said arc members having an inner diameter smaller than an outer diameter of the pressure pipes and larger than an inner diameter of the pressure pipes; preparing a cylindrical flange, said flange having an inner cylinder surface for externally fitting the outer circumferences of the arc members formed in the ring shape through a step retreating outside in a radial direction over on the entire circumference from the diameter for externally fitting the pressure pipes on an inside hollow where the pressure pipes are inserted, and horizontal holes bored on a circumference at intervals equal angular in a direction of a center line of the hollow;
cutting the pressure pipes to a certain length that is suited to a placement site;
cutting a groove fitted to the arc members on positions distant from the cut end of the pressure pipes;
positioning the inner cylinder surface of the flange to the end parts of the pressure pipes rather than to the step, and then inserting the pressure pipes into the hollow;
fitting the arc members into the groove to form a ring; and
making the step in contact with the arc members to position the arc members fitted into the groove against the inner cylinder surface.

6. A method for constructing pressure pipes with a flange for flowing pressurized fluid in an inside, said method comprising:
preparing a cylindrical flange having a plurality of arc members formed in a ring shape that makes a circle by matching end faces, said flange having an inner diameter smaller than an outer diameter of the pressure pipes and larger than an inner diameter of the pressure pipes and horizontal holes bored on a circumference at intervals equal angular in a direction of a center line of the hollow, and said arc members being connected with screws;
cutting the pressure pipes to a certain length that is suited to a placement site;
cutting a groove fitted to the arc members on a position distant from the cut end of the pressure pipes; and
connecting with the screws after fitting the arc members into the groove to form the ring.
